# EUROPÄISCHE PATENTSCHRIFT

(11) **EP 2 811 160 B1**
(45) Veröffentlichungstag und Bekanntmachung des Hinweises auf die Patenterteilung: **20.09.2017**
(21) Anmeldenummer: 14170720.8
(22) Anmeldetag: 02.06.2014
(51) Int. Cl.: F03D 80/80, F03D 13/25, F03D 9/25

(54) **Anlage zur Erzeugung von Windenergie auf See**
Plant for the production of wind energy at sea
Installation de production d'énergie éolienne en mer

(30) Priorität: 03.06.2013 DE 102013009439
(43) Veröffentlichungstag der Anmeldung: 10.12.2014
(73) Patentinhaber: Siemens Aktiengesellschaft, 80333 München (DE)
(72) Erfinder: Findeisen, Jörg, 01156 Dresden (DE)

(56) Entgegenhaltungen:
- EP-A1- 2 221 474
- EP-A2- 2 725 223
- US-A1- 2011 037 264

## Beschreibung

Die Erfindung betrifft die modulare Gestaltung von Funktionseinheiten für Offshore-Windparks, sowie eine Gründungsstruktur für Offshore-Bauwerke, die zur Aufnahme solcher Module geeignet ist.

Die beschriebene Lösung ist insbesondere zur Schaffung der für Wartungsarbeiten in solchen Windparks erforderlichen Wohn-, und Versorgungsstützpunkte geeignet. Ein bevorzugtes Anwendungsgebiet dieser Lösung stellt die Unterbringung der Komponenten der seeseitigen Umspannwerke für die Netzanbindung derartiger Offshore-Windparks dar.

Durch die beschriebene Lösung kann ganz oder teilweise auf die dem Stand der Technik entsprechenden Plattformen für die seeseitig zu errichtenden Umspannwerke dieser Windparks verzichtet werden.

Bekannt ist die seeseitige Errichtung von Umspannwerken auf speziellen Plattformen, welche auf See montiert werden. Weiterhin bekannt ist die Verwendung selbstschwimmender Plattformen, welche dann am Aufstellungsort am Seeboden verankert werden.

Bekannt ist weiterhin die Gründung der Fundamente von Windenergieanlagen auf mehreren in den Meeresboden eingerammten Gründungsrohren, welche über ein den Turm tragenden Stützgerüst miteinander verbunden sind. Bekannte Vertreter solcher Konstruktionen sind Tripod und Tripile Fundamente. Ein solches Fundament ist in DE 10 2004 042 066 beschrieben.

Bekannt ist die Positionierung des zu einer Windkraftanlage gehörenden Transformators in der Gondel oder im Turm einer Windkraftanlage. Weiterhin ist aus DE 10 013 442 Cl die Anbringung von Containern an der Gondel einer Windkraftanlage bekannt.

In der US 2011/0037264 A1 ist eine Windkraftanlage beschrieben, die eine aus Hohlstrukturelementen bestehende Gründungsstruktur und einen Turm aufweist. Am Ende des Turmes ist eine Gondel angeordnet, in der ein Generator, ein Getriebe und Steuer- und Regelsysteme angeordnet sind.

In allen diesen Fällen, ist die Erstellung der Umspannplattform mit erheblichen Kosten verbunden. Ein weiterer Nachteil ist der erhebliche Aufwand beim Austausch großer Komponenten zum Beispiel der Transformatoren im Reparaturfall.

Ziel der Erfindung ist es die genannten Nachteile zu vermeiden.

Die Aufgabe wird erfindungsgemäß durch die Merkmale des Anspruchs 1 gelöst.

Dabei weist eine Anlage zur Erzeugung von Windenergie auf See, beispielsweise ein Offshore Windpark, mehrere seegestützte Windkraftanlagen mit jeweils einer einen Turm tragenden Gründungsstruktur aus mehreren Hohlstrukturelementen auf sowie ein aus mehreren Komponenten bestehendes Umspannwerk.

Erfindungsgemäß weist ein Funktionsmodul ein oder mehrere in einem abgeschlossenen Gehäuse angeordnete Komponenten auf und die Funktionsmodule sind an den Hohlstrukturelementen über eine lösbare Verbindung befestigt.

Die Komponenten des Umspannwerks können dabei Transformatoren, Drosseln, Leistungsschalter, Ventilgruppen von Gleich- oder Wechselrichtern, Energiespeicher und ähnliche elektrische Baugruppen sein. Ein Funktionsmodul fasst dabei eine oder mehrere solcher Komponenten nach Funktion oder Phase zusammen.

Offshore-Bauwerke weisen meist Fundamente auf, welche aus Stahlrohren gebildet sind. Dabei kommen in Abhängigkeit von den jeweiligen Einsatzbedingungen verschiedene Konstruktionen zum Einsatz, beispielsweise Monopile-Fundamente, die nur einen einzelnen Pfahl aufweisen, Jacket-Fundamente, die eine Stahlfachwerkkonstruktion aufweisen, Tripod-Fundamente, die eine Dreibeinkonstruktion aus Stahlrohren aufweisen, welche unter Wasser einen Hauptpfahl stützt, Tripile-Fundamente, die drei am Meeresboden verankerte Pfähle aus Stahlrohr aufweisen, auf welche über Wasser eine Dreibeinkonstruktion aufgesetzt wird, oder Mehrpfahlsysteme.

Die genannten Hohlstrukturelemente der Gründungsstruktur solcher Offshore-Bauwerke werden erfindungsgemäß mit Funktionsmodulen versehen, welche direkt auf den genannten vertikalen Hohlstrukturelementen der Gründungsstruktur platziert werden. Diese Funktionsmodule sind über eine lösbare Verbindung mit den vertikalen Hohlstrukturelementen der Gründungsstruktur verbunden. Dazu werden die Hohlstrukturelemente der Gründung mit speziellen Aufnahme-, und Befestigungselementen für diese Module versehen.

Diese Funktionsmodule oder Container können sowohl die Baugruppen eines Umspannwerkes, als auch weitere Funktionsräume enthalten. So ist zum Beispiel die Anordnung eines Wohncontainers auf einem solchen Tragrohr möglich. Auf diese Weise lässt sich auf einfache Art und Weise eine Schall- und Schwingungsentkopplung von Anlagenteilen und Wohnbereichen erreichen. Vorteilhafterweise können nun die Container mit Funktionsbereichen, welche einen erhöhten brandschutztechnischen Schutzumfang erfordern, derart auf den Tragrohren der Gründung platziert werden, dass sich ein großer Abstand zu den mit einem höheren Brandrisiko behafteten Containern (Beispielsweise der Transformatoreneinheit) ergibt.

Erfindungsgemäß werden die Abmessungen der genannten Hohlstrukturen derart dimensioniert, dass eine Platzierung der Funktionsmodule ermöglicht wird. Die Module / Container werden entsprechend ihrer Masse, ihren Abmessungen und den jeweils erforderlichen Betriebsbedingungen mittels der entsprechenden Verbindungselemente auf den Hohlelementstrukturen platziert.

Die Gewichtskraft der Komponenten des Umspannwerkes (insbesondere der Leistungstransformatoren) in der Gründungsstruktur führt zu einer Erhöhung der Masse derselben und trägt damit zur Erhöhung der Stabilität des Offshore-Bauwerkes bei.

Vorzugsweise ist am Turm ein Hebewerkzeug angeordnet, dessen Schwenkbereich die Hohlstrukturelemente derart überstreicht, dass die Funktionsmodule von einem Seefahrzeug zu den Hohlstrukturelementen verladbar sind.

Vorteilhaft weist das Umspannwerk mehrere Phasen auf und die Komponenten jeder Phase sind in jeweils einem Funktionsmodul angeordnet.

In dieser vorteilhaften Ausgestaltung der Erfindung werden Funktionsmodule des Umspannwerkes einphasig ausgeführt und die Module jeweils einer Phase auf verschiedenen Gründungspfeilern der Gründungsstruktur platziert. Vorteilhafterweise werden die Komponenten einer Phase teilweise oder ganz zu einem Modul verbunden. Damit ergibt sich eine vereinfachte Fertigung und Reservehaltung für die Funktionsmodule. Durch die Nutzung von 4 Modulen wird es möglich, elektrische Komponenten für eine Phase als Ersatz für den Ausfall einer Komponente bereitzustellen. Insbesondere die Bereitstellung eines Reservetransformators in der vorgenannten Weise erspart aufwändige seeseitige Ausbau- und Transportprozesse im Schadensfall.

In gleicher Weise lässt sich der Parallelbetrieb von Funktionseinheiten des Offshore-Umspannwerkes vorteilhaft realisieren.

Erfindungsgemäß kann ein Leistungstransformator durch geeignete Gestaltung selbst als Modul für das Offshore-Umspannwerk ausgebildet sein.

Ferner wird bevorzugt, dass das Gehäuse als elektrische und/oder magnetische Abschirmung der in seinem Inneren angeordneten Komponenten ausgebildet ist.

Es wird auch bevorzugt, dass die Funktionsmodule an einem über einen Wasserspiegel ragenden Ende der Hohlstrukturelemente angeordnet sind.

In einer weiteren Ausführungsform werden die Verbindungselemente zwischen den Tragrohren und / oder die Verbindungselemente zwischen den Tragrohren und dem Turm mit einer speziellen Flamm- und Feuerschutzwand ausgerüstet.

Die Wärme abgebenden Komponenten des Offshore-Umspannwerkes werden je nach abzuführender Verlustleistung und Umgebungsbedingungen mittels Seewasser, oder Umgebungsluft gekühlt.

In einer Ausgestaltung der Erfindung werden die Kühlanlagen eines Umspannwerkes in einem getrennten Modul auf einem separaten Fundamentpfeiler des Offshore-Umspannwerkes angeordnet. Die entstehende Entfernung zur Arbeits- und / oder Wohnplattform ermöglicht eine Verminderung der Anforderungen an die Geräuschdämmung der Kühlanlage und damit eine Erhöhung der Effizienz der Kühlanlage, sowie insbesondere bei Luftkühlung durch die dann mögliche Erhöhung des Volumenstromes eine Verkleinerung der Kühlanlage und damit eine Verringerung der Kosten. Insbesondere zur Abfuhr der durch die Ventile einer HGÜ-Anlage anfallenden hohen Verlustleistung ergeben sich damit neue Möglichkeiten.

Weiterhin schließt die beschriebene Anordnung auch die so genannten selbst schwimmenden Offshore-Umspannwerke ein, dann können die ausfahrbaren Tragsäulen und / oder ihr Gehäuse zur Bildung der erfindungsgemäßen Struktur genutzt werden.

Weitere alternative oder bevorzugte Ausführungsformen werden im Folgenden beschrieben:
In einer alternativen Ausführung der Erfindung weist ein Offshore-Windpark, eine zumindest teilweise aus vertikal ausgerichteten Hohlstrukturelementen gebildete Gründungsstruktur auf, wobei diese Hohlstrukturelemente mit Funktionsmodulen bestückt sind.

Vorteilhaft sind dabei die Funktionsmodule über eine lösbare Verbindung mit der Gründungsstruktur verbunden sind und die Hohlstrukturelemente der Gründung mit speziellen Aufnahme-, und Befestigungselementen für diese Module versehen sind.

Ferner wird bevorzugt, dass die Gründungsstruktur einen zentral angeordneten Turm für eine Windkraftanlage trägt und diese Gründungsstruktur mehrere radial zum Turm beabstandete Tragstrukturen einschließt.

Weiterhin wird bevorzugt, dass die Module des Bauwerkes die Komponenten eines seeseitigen Umspannwerkes für die Netzanbindung eines Offshore-Windparks enthalten.

In einer vorteilhaften Ausgestaltung sind die Abmessungen der zur Platzierung der Module des Umspannwerkes dienenden Hohlstrukturen derart dimensioniert, dass eine Platzierung der Module eines Umspannwerkes entsprechend ihrer jeweiligen Masse, ihren Abmessungen und den jeweils erforderlichen Betriebsbedingungen ermöglicht wird.

Des Weiteren sieht eine vorteilhafte Ausgestaltung der Erfindung vor,
dass an einem zentralen Pfeiler oder dem Turm einer Windkraftanlage ein drehbares Hebezeug derart angebracht ist, dass dessen Dreh- und Schwenkbereich die Hohlstrukturelemente überstreicht, welche zur Aufnahme von Modulen des Umspannwerkes vorgesehen sind.

Ebenfalls vorteilhaft sind Module eines Umspannwerkes entweder nach Funktionen oder nach den Phasen des Drehstromnetzes geordnet auf jeweils verschiedenen Gründungspfeilern des Offshore-Bauwerkes angeordnet.

Vorzugsweise sind mehrere Funktionsmodule turmartig auf oder in den Hohlstrukturelementen der Gründung angeordnet.

Ferner wird bevorzugt, dass die Funktionsmodule entsprechend ihrer Feuergefährlichkeit, ihres Schwingungs- und Körperschallverhaltens, ihrer Anforderungen an die Geräuschdämmung und ihrer Sensibilität gegenüber Umwelteinflüssen, zueinander beabstandet auf den Gründungspfeilern der Gründungsstruktur angeordnet werden.

Vorteilhaft sind die horizontalen oder geneigten Verbindungselemente zwischen den vertikalen Hohlstrukturelementen des Offshore-Bauwerkes mit einem Weg ausgestattet, welcher den Transport von Personal und Material zwischen den Funktionseinheiten ermöglicht.

Vorzugsweise sind die Verbindungen der Hohlstrukturelemente mit Brandschutzwällen (3.1) ausgestattet und zumindest teilweise mit Brandschutztüren (3.2) versehen.

Vorteilhaft sind das Modul und die zugehörige Befestigungsvorrichtung auf dem Hohlstrukturelement der Gründungsstruktur mit einer Führungseinrichtung oder Ausrichthilfe zur Unterstützung des Aufsetzens des Modules bei der Montage mittels eines Kranes ausgestattet.

Weiterhin wird bevorzugt, dass der das Modul aufnehmende Kopf der Gründungsstruktur mit einer Personen- und Materialschleuse versehen ist, welche über eine verschließbare Tür oder Klappe verfügt und das das Modul mit einer Öffnung im Boden versehen ist, welche diese Klappe umschließt, so dass diese Klappe nach der Montage des Moduls auf der Gründungsstruktur betätigbar ist.

Des Weiteren sieht eine vorteilhafte Ausgestaltung der Erfindung vor, dass die Außenhaut des Modules als elektrische und / oder magnetische Abschirmung für die innerhalb des Modules befindlichen elektrische Komponenten ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden.

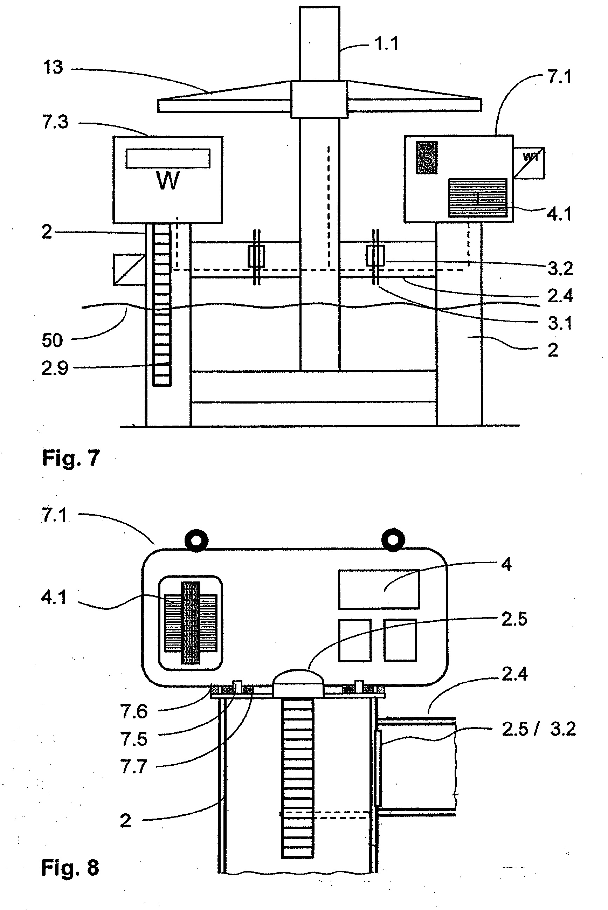

Einander entsprechende Teile sind in allen Figuren mit den gleichen Bezugszeichen versehen.

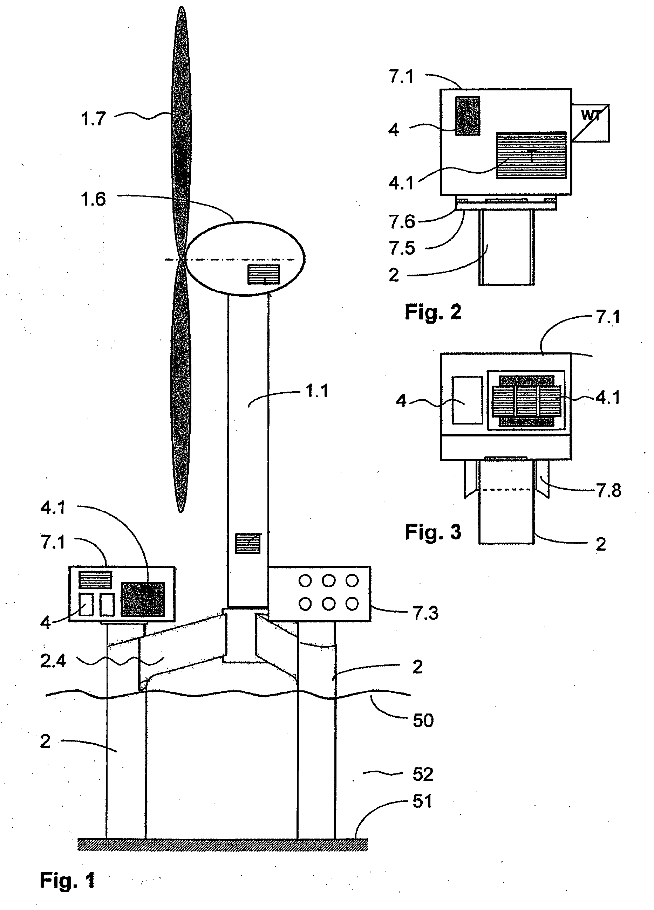

Fig. 1 zeigt eine Gründung für das Fundament des Turmes einer Windkraftanlage. Erfindungsgemäß werden die Tragrohre der Gründung (2) derart gestaltet, dass sie jeweils in der Lage sind Funktionscontainer (7.1/7.3) aufzunehmen. Dazu werden diese mit speziellen Befestigungselementen für solche Module (7) ausgestattet. Diese Module können sowohl die Baugruppen (4) eines Umspannwerkes, als auch weitere Funktionsräume enthalten. So ist zum Beispiel die Anordnung eines Wohncontainers (7.3) auf einem solchen Tragrohr (2) möglich.
Fig. 2 zeigt ein Funktionsmodul (7.1) mit Komponenten eines Umspannwerkes (4), einschließlich eines Transformators (4.1), welches auf einem Hohlstrukturelement der Gründung einer Offshore-Struktur (2) mittels erfindungsgemäßer Befestigungselemente (7.5) angebracht ist. Im Ausführungsbeispiel ist diese Verbindung mittels einer Dichtung (7.6) zwischen dem Modul und dem Befestigungselement vor dem Eindringen aggressiver Medien in den Verbindungsraum geschützt. Weiterhin ist der Kopfbereich der Befestigungselemente mit speziellen Führungselementen ausgestattet, welche ein sicheres Aufsetzen der Container auf See mittels eines Kranes gestatten.
Fig. 3 zeigt ebenfalls ein Funktionsmodul (7.1) mit Komponenten eines Umspannwerkes. In diesem Ausführungsbeispiel sind das Funktionsmodul und die Befestigungselemente mit einer Führungseinrichtung (7.8) zur Erleichterung der Montage des Funktionsmodules auf der Gründungsstruktur versehen.

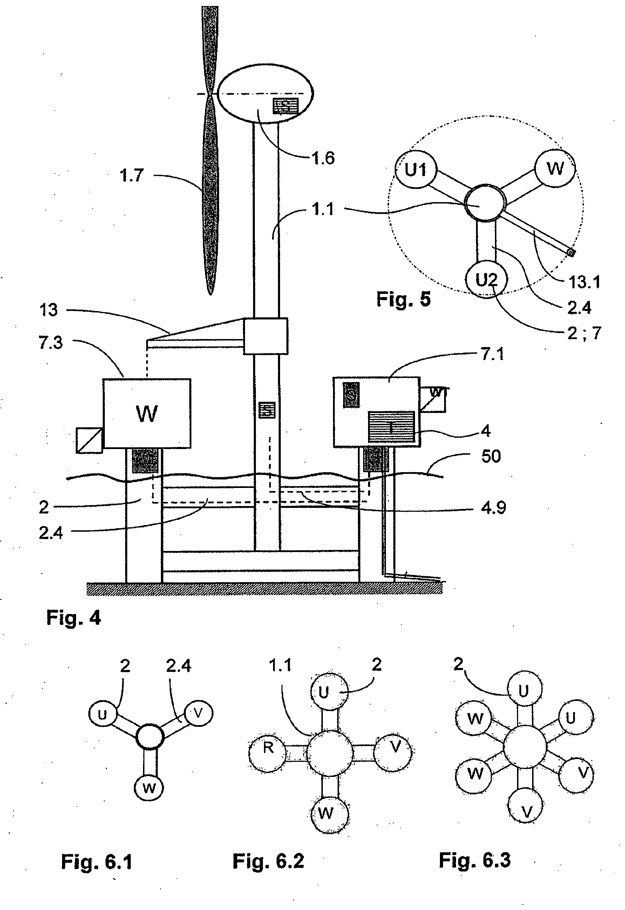

Fig. 4 zeigt das Ausführungsbeispiel eines Offshore-Bauwerkes, welches sowohl mit Modulen eines Umspannwerkes (7.1) als auch mit einem Wohnmodul (7.3) ausgestattet ist. Solche Einheiten eignen sich besonders zur Unterbringung des Wartungs- und Servicepersonals für die zahlreichen Windkraftanlagen eines Offshore-Windparks. Weitere Nutzungsmöglichkeiten solcher Wohnmodule sind denkbar (Erholung, Hotel, Fischerei). Durch die erfindungsgemäße Gestaltung des Offshore-Bauwerkes werden solche Nutzungsmöglichkeiten durch die mögliche räumliche Trennung der Nutzungsbereiche erleichtert, da die beschriebene Lösung auf einfache Art und Weise eine Schall- und Schwingungsentkopplung von Anlagenteilen und Wohnbereichen ermöglicht. Dazu werden jeweils akustisch sensible Funktionsmodule (7.3), von den geräuschintensiven Bereichen (7.1) getrennt. Im Ausführungsbeispiel werden die horizontalen oder geneigten Verbindungselemente (2.4) zwischen den Hohlstrukturelementen (2) mit einem Weg ausgestattet, welcher den Transport von Personal und Material ermöglicht.
Fig. 5 zeigt eine Draufsicht des Offshore-Bauwerkes. Erfindungsgemäß sind die Funktionsmodule an den entsprechenden Befestigungselementen der Gründungsstruktur angebracht. Es ergibt sich eine radial vom zentralen Hohlstrukturelement der Gründung beabstandete Anordnung der Funktionsmodule. Die Anordnung wird mit einem Hebezeug oder Kran (13) versehen, dessen Schwenkbereich und Ausladung in der Lage sind alle Funktionsmodule (7) zu erreichen. Im Ausführungsbeispiel sind die Module auf 3 Pfeilern der Gründungsstruktur (2) angeordnet. Weiterhin werden im Ausführungsbeispiel 2 Module (U1,U2) zur Bildung des Umspannwerkes und ein Modul als Wohncontainer (W) genutzt.
Fig. 6.1, 6.2, 6.3 zeigen eine Auswahl weiterer Gestaltungsmöglichkeiten für das modular gestaltete Offshore-Bauwerk.
Fig. 6.1 zeigt die Bildung eines Umspannwerkes aus einphasigen Umspanneinheiten (U,V,W), welche jeweils auf einem der 3 Hohlstrukturelemente (2) der Gründungsstruktur angeordnet sind.
Fig. 6.2 stellt die Nutzung eines 4. Moduls zur Bildung einer einphasigen Reserveeinheit dar.
Fig. 6.3 zeigt ein Ausführungsbeispiel für die Bildung von 2 Drehstromeinheiten aus 6 Modulen, welche auf einer entsprechenden Gründungsstruktur (2) angeordnet sind.
Im Ausführungsbeispiel der Fig. 7 werden die horizontalen oder geneigten Verbindungselemente (2.4) zwischen den Hohlstrukturelementen (2) mit einem Weg ausgestattet, welcher den Transport von Personal und Material ermöglicht. In der gezeigten Ausführungsform werden die Verbindungselemente zwischen den Tragrohren (2.4) und / oder die Verbindungselemente zwischen den Tragrohren und dem Turm (2) mit einer speziellen Flamm- und Feuerschutzwand (3.1) ausgerüstet. Diese Feuerschutzwand ist im Ausführungsbeispiel mit speziellen Brandschutztüren (3.2) ausgestattet. Vorteilhafterweise werden auch die Container mit Funktionsbereichen, welche einen erhöhten brandschutztechnischen Schutzumfang erfordern, beispielsweise Wohncontainer (7.3), derart auf den Tragrohren (2) der Gründung platziert werden, dass sich ein großer Abstand zu den mit einem höheren Brandrisiko behafteten Containern, Beispielsweise Container (7.1) mit ölgefüllten Transformatoren (4.1) ergibt. Die genannte Verfahrensweise kann vorteilhaft auch zur Verwendung solcher Module als Energiespeicher, Module zur Elektrolyse oder Module zur Aufbewahrung von Treibstoff zur Anwendung kommen. So ist auch die Nutzung eines in beschriebener Weise gesicherten Modules als Lager für Gefahrgut (Beispielsweise den Diesel für die Notstromaggregate), oder als Lager für die Anstrichstoffe, welche bei den Wartungsarbeiten für die Vielzahl der zum Offshore-Windpark zugehörigen Windkraftanlagen benötigt werden, eine vorteilhafte Anwendung.
Fig. 8 zeigt ein Ausführungsbeispiel bei dem ein Funktionsmodul (7.1) eine aus mehreren Komponenten (4) gebildete Umspanneinheit enthält. Das Funktionsmodul ist mittels spezieller Befestigungselemente (7.5) auf einem Hohlstrukturelement der Gründung (2) befestigt. Im Ausführungsbeispiel sind die Befestigungselemente (7.5) radial von Schwingungsdämmelementen (7.7) umgeben. Um eine korrosive Gefährdung des gesamten Verbindungsbereiches zu vermeiden wird die Verbindungseinheit im Ausführungsbeispiel durch eine Dichtung (7.6) geschützt, welche derart im äußeren Bereich der Befestigungseinheit angeordnet wird, dass sie diese radial umschließt und somit die Verbindungsanordnung gegen das Eindringen korrosiver Einflüsse schützt. Die Aufnahmevorrichtung für das Modul ist im Ausführungsbeispiel derart gestaltet, dass das Funktionsmodul (7.1) von der Gründungsstruktur (2) zugänglich ist. Dazu ist der Kopfbereich der Aufnahmevorrichtung mit einer Material- und Personenschleuse versehen, welche mit einer Tür oder Klappe (2.5) verschließbar ist. Der Fußbereich des Funktionsmoduls (7.1) ist mit einer zwischen den Lager- und Befestigungselementen liegenden Öffnung versehen. Somit ist diese Verbindungstür oder Klappe (2.5) auch vom Innenraum des Moduls (7.1) zugänglich. Vorteilhafterweise wird diese Klappe als Brandschutztür ausgeführt. Die Klappe schließt im Ausführungsbeispiel das Hohlstrukturelement sicher von der Umgebung ab und wird erst nach Montage und Inbetriebnahme von Funktionsmodulen geöffnet. Die Verbindung zwischen den verschiedenen Funktionsmodulen der Plattform wird über Wege innerhalb der horizontalen oder geneigten Verbindungselemente (2.4) gewährleistet. Diese können ebenfalls mit Brandschutzwällen und Brandschutztüren (3.2) versehen werden.

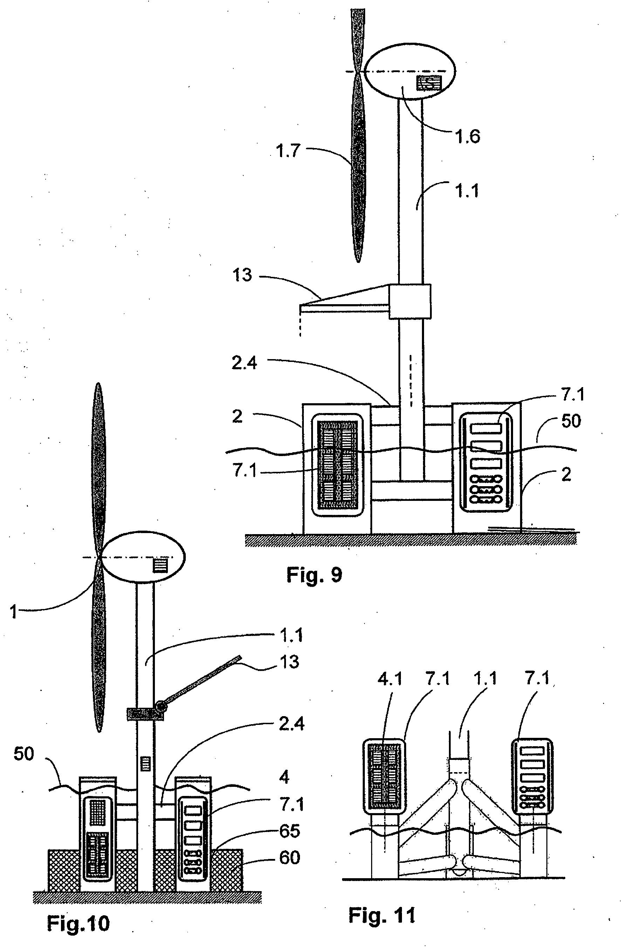

Fig. 9 zeigt ein nicht beanspruchtes Ausführungsbeispiel, bei dem die Funktionsmodule (7.1) innerhalb der Hohlstrukturelemente (2) der Gründungstruktur angeordnet sind. Weiterhin zeigt das Ausführungsbeispiel eine weitere Ausgestaltung der Erfindung bezüglich des eingesetzten Transformators. Im Ausführungsbeispiel ist das ein Funktionsmodul eines Umspannwerkes (7.1) mit einem Transformator (4.1) ausgestattet, welcher als Drehstrom-Manteltyp ausgeführt ist. Dieser ist derart im Funktionsmodul angeordnet, das die Wicklungsachsen in gleicher Richtung wie die Achse des zylindrischen Funktionsmoduls (7.1) ausgerichtet sind. Auf diese Weise wird die Platzierung von Funktionsmodulen mit Transformatoren bis zu höchsten Leistungen in den Hohlstrukturelementen (2) der Gründung eines Offshore-Bauwerkes möglich.
In Fig. 10 ist eine nicht beanspruchte Ausführung auf einem Schwerkraftfundament (60) dargestellt. Dieses wird im Ausführungsbeispiel durch einen Betonblock (60) gebildet. In diesem befindet sich die Verankerung für den Turm (1.1) der Windkraftanlage. In die Fundamentstruktur (60) werden Hohlstrukturen (65) zur Aufnahme der Funktionsmodule (7.1) des Offshore-Bauwerkes eingebunden. Solche Schwerkraftfundamente sind auch in Wannenform ausführbar und können dann Schwimmfähigkeit erreichen. In diesem Falle ist die beschriebene Lösung analog umsetzbar.
Fig. 11 zeigt ein nicht beanspruchtes Ausführungsbeispiel, bei dem der Transformator (4.1) selbst ein Funktionsmodul (7.1) darstellt und erfindungsgemäß auf den Hohlstrukturelementen (2) der Plattform befestigt wird. Dargestellt ist hier ebenfalls eine vertikale Mantelausführung des Transformators. Bei dieser Ausführung ist der Transformator vorteilhaft auch in der Standardausführung und in normal stehender Anordnung platzierbar.

## Patentansprüche

1. Anlage zur Erzeugung von Windenergie auf See, mit
- mehreren seegestützten Windkraftanlagen (1) mit jeweils einer einen Turm (1.1) tragenden Gründungsstruktur aus mehreren vertikalen Hohlstrukturelementen (2)
- einem aus mehreren Komponenten (4, 4.1) bestehenden Umspannwerk zur Netzanbindung, und mit
- mehreren Funktionscontainern (7), wobei ein oder mehrere der Funktionscontainer (7) jeweils ein oder mehrere in einem abgeschlossenen Gehäuse angeordnete Komponenten (4, 4.1) des Umspannwerkes aufweist, wobei jeder der mehreren Funktionscontainer (7) direkt auf jeweils einem der vertikalen Hohlstrukturelemente (2) der Gründungsstruktur angeordnet und daran über eine lösbare Verbindung befestigt ist, wobei die Hohlstrukturelemente (2) mit speziellen Aufnahme- und Befestigungselementen für die Funktionscontainer (7) versehen sind.

2. Anlage zur Erzeugung von Windenergie auf See nach Anspruch 1, **dadurch gekennzeichnet, dass** am Turm (1.1) ein Hebewerkzeug (13) angeordnet ist, dessen Schwenkbereich die Hohlstrukturelemente (2) derart überstreicht, dass die Funktionscontainer (7) von einem Seefahrzeug (12) zu den Hohlstrukturelementen (2) verladbar sind.

3. Anlage zur Erzeugung von Windenergie auf See nach einem der Ansprüche 1 oder 2, **dadurch gekennzeichnet**, das Umspannwerk mehrere Phasen aufweist und die Komponenten (4, 4.1) jeder Phase in jeweils einem Funktionscontainer (7) angeordnet sind.

4. Anlage zur Erzeugung von Windenergie auf See nach einem der Ansprüche 1 bis 3, **dadurch gekennzeichnet, dass** das Gehäuse als elektrische und/oder magnetische Abschirmung der in seinem Inneren angeordneten Komponenten (4, 4.1) ausgebildet ist.

5. Anlage zur Erzeugung von Windenergie auf See nach einem der Ansprüche 1 bis 4, **dadurch gekennzeichnet,**
**dass** die: Funktionscontainer (7) an einem über einen Wasserspiegel (50) ragenden Ende der Hohlstrukturelemente (2) angeordnet sind.

## Claims

1. Installation for generating wind energy at sea, comprising - a plurality of sea-based wind turbines (1) each having a foundation structure which carries a tower (1.1) and is composed of a plurality of vertical hollow structure elements (2),
- a substation for grid connection that consists of a plurality of components (4, 4.1), and comprising
- a plurality of functional containers (7), wherein one or more of the functional containers (7) each has one or more components (4, 4.1) of the substation that are arranged in a closed-off housing, wherein each of the plurality of functional containers (7) is arranged directly on in each case one of the vertical hollow structure elements (2) of the foundation structure and is fastened thereto via a releasable connection, wherein the hollow structure elements (2) are provided with special receiving and fastening elements for the functional containers (7).

2. Installation for generating wind energy at sea, according to Claim 1, **characterized in that** the tower (1.1) has arranged thereon a lifting tool (13) whose pivoting range sweeps over the hollow structure elements (2) in such a way that the functional containers (7) can be offloaded from a sea vessel (12) to the hollow structure elements (2).

3. Installation for generating wind energy at sea, according to either of Claims 1 and 2, **characterized in that** the substation has a plurality of phases and the components (4, 4.1) of each phase are arranged in in each case a functional container (7).

4. Installation for generating wind energy at sea, according to one of Claims 1 to 3, **characterized in that** the housing is designed as an electrical and/or magnetic shielding of the components (4, 4.1) arranged in its interior.

5. Installation for generating wind energy at sea, according to one of Claims 1 to 4, **characterized in that** the functional containers (7) are arranged at an end of the hollow structure elements (2) that projects above a water level (50).

## Revendications

1. Installation de production d'énergie éolienne en mer, comprenant
- plusieurs éoliennes (1) en mer, ayant respectivement une structure de fondation portant une tour (1.1) et composée de plusieurs éléments (2) verticaux de structure creux,
- un poste de transformation constitué de plusieurs composants (4, 4.1) pour la liaison à un réseau et comprenant
- plusieurs réci pients (7) fonctionnels, un ou plusieurs des récipients (7) fonctionnels ayant respectivement un ou plusieurs composants (4, 4.1) disposés dans un boîtier fermé du poste de transformation, chacun des plusieurs récipients (7) fonctionnels étant disposés sur respectivement l'un des éléments (2) verticaux creux de la structure de fondation et y étant fixés par une liaison amovible, les éléments (2) de structure creux étant pourvus d'éléments spéciaux de réception et de fixation des récipients (7) fonctionnels.

2. Installation de production d'énergie éolienne en mer suivant la revendication 1, **caractérisée**
**en ce qu'**il est monté sur la tour (1.1) un outil (13) de levage, dont la plage de pivotement balaie les éléments (2) de structure creux, de manière à pouvoir charger les récipients fonctionnels par un véhicule (12) maritime sur les éléments (2) de structure creux.

3. Installation de production d'énergie éolienne en mer suivant l'une des revendications 1 ou 2, **caractérisée**
**en ce que** le poste de transformation a plusieurs phases et les composants (4, 4.1) de chaque phase sont disposés dans respectivement un récipient (7) fonctionnel.

4. Installation de production d'énergie éolienne suivant l'une des revendications 1 à 3, **caractérisée**
**en ce que** le boîtier est constitué sous la forme d'un blindage électrique et/ou magnétique des composants (4, 4.1) disposés à l'intérieur.

5. Installation de production d'énergie éolienne suivant l'une des revendications 1 à 4, **caractérisée**
**en ce que** les récipients (7) fonctionnels sont disposés à une extrémité, dépassant du niveau (50) de l'eau, des éléments (2) de structure creux.
